# EUROPEAN PATENT APPLICATION

(11) **EP 2 090 560 A1**
(43) Date of publication of application: **19.08.2009**
(21) Application number: 08150856.6
(22) Date of filing: 30.01.2008
(51) Int. Cl.: C04B 40/06, C09K 8/42, C09K 8/467

(54) **Chemical activation for cement setting**

(71) Applicant: Schlumberger Holdings Limited, Road Town, Tortola (VG); Services Pétroliers Schlumberger, 75007 Paris (FR); PRAD Research and Development N.V., Willemstad, Curacao (AN); Schlumberger Technology B.V., 2514 JG The Hague (NL)
(72) Inventor: Bedel, J.P., 92142, Clamart (FR); Ermel, M, 92142, Clamart (FR); Daccord, G, 92142, Clamart (FR); Ding, B, 92142, Clamart (FR)
(74) Representative: Hyden, Martin Douglas

(57) **Abstract**

A method of accelerating the compressive strength development and setting time of a cement slurry during a cementing operation for a wellbore comprising: preparing a cement slurry comprising a hydraulic cement and water on the surface;
placing the cement slurry in the wellbore;
adding an activator to the cement slurry in the wellbore; and
allowing the cement composition to set;

wherein the activator acts as a set accelerating agent and a compressive strength enhancing additive.

## Description

### Technical field

This invention relates to methods of cementing in wellbores, in particular methods to accelerate the setting of cement.

### Background art

After drilling an oil or similar well, a portion of the well is cemented. Cementing helps to prevent fluid exchange between the different formations layers through the well, to prevent gas from rising in the annular space surrounding the casing to limit the ingress of water into the production well, and principally to hold the casing in place.

At ambient temperature the setting of hydraulic cement can be a slow process. After mixing cement powder with water, the slurry undergoes a "dormant" phase before setting. The duration of the dormant phase at ambient temperature is typically a few hours. The duration can vary with temperature. However at higher temperatures the duration is reduced and a retarder is often needed to control the setting time of the slurry to have the slurry fluid enough for the working operations.

The concentration of a retarder mixed in the cement slurry is adjusted to get the right setting time for the corresponding operation. Depending on the application the setting time is often adjusted to be longer than necessary, mainly for safety reason as it is critical that the cement slurry does not start to set before the end of the working operations. In an oilfield operation this corresponds to the placement of the slurry in the annulus between the casing and the formation. If the setting time is too long the economic cost of the dormant phase becomes significant as the next operation has to wait until the cement slurry has began to set before it can begin. This corresponding lose of time can result in a lose of money. Therefore it is important to avoid this lost time. This "dormant" phase corresponds to time spent, waiting for the slurry to gain enough mechanical properties to resume operations, this is often called the wait-on-cement (WOC) period. This situation is particularly significant in oil well cementing, more specifically when the cement setting occurs at low temperature such as in deepwater offshore conditions, but also for the cementing of a casing in casing drilling operations where the WOC time becomes an important part of the drilling flat time (non-drilling time during drilling operations).

The WOC time corresponds to the time the operator waits before they resume drilling operations, due to the delayed setting of the cement slurry. In order to resume the drilling operations it is at least necessary that the cement has set at the casing shoe and developed a sufficient compressive strength to be properly drilled. It is usually considered that the minimum compressive strength required is 500 psi (3.45 MPa).

Casing drilling is a technology for simultaneously drilling and casing a well where the casing is used to transmit mechanical and hydraulic energy to the bit instead of using a conventional drill-string. A drilling assembly is positioned at the lower end of the casing instead of being located on the lower end of the conventional drill-string. During casing drilling the drilling assembly is retrieved with a wireline to access bits, motors, underreamers, MWD/LWD, and other components while leaving the casing in place.

Due to the wireline retrievable bottom hole assembly there are less drill-string trips in casing drilling than in conventional drilling which affects the flat time. Due to the reduction of drill-string trips, the WOC time in casing drilling becomes a significant part of the flat time. In order to have cementing operations more efficient in the casing drilling context, it would be valuable to decrease drastically the flat time associated with the cementing job. The flat time can be decreased by decreasing the WOC time as low as possible, ideally bringing the WOC time to zero.

In order to reduce the WOC time in well conditions so that it corresponds to cementing jobs on land, it is necessary to accelerate the hydration of a retarded or non-retarded cement slurry depending on the well depth. The objective is to get a very rapid setting of the tail cement slurry once displacement is achieved and to get the fastest compressive strength development possible for the cement slurry located at the casing shoe.

For a conventional cementing job the cement slurry is prepared on surface. The necessary additives for the cement slurry are added to the mixing water, this includes an antifoam agent and a dispersing agent, and eventually a retarder and/or an accelerator agent depending on the downhole temperature. The cement powder, water and additives are mixed with the water and the cement slurry is then pumped down the wellbore through the casing, to cement the annulus between the casing and the well bore.

This method requires the cement slurry to be mixed at surface temperature but be designed to set at the downhole temperature. Therefore the setting time of the cement slurry has to be adjusted in order to allow the cement to be pumped to the right place in the annulus before it sets. Then once the cement is in place, it has to set as fast as possible in order to resume the drilling operations for the next casing stage. To avoid the setting of the cement slurry in the casing or annulus during the displacement of the slurry a safety margin on the setting time has to be planned and the concentration of the accelerator or retarder in the slurry has to be adjusted depending on the downhole conditions. The challenge is to induce the setting of the cement slurry as quick as possible once it has been placed without compromising the safety margin of the cementing operations.

It is known to use certain chemicals to accelerate the setting of cement slurries. Calcium chloride (CaCl₂) and sodium silicate are common accelerants. These are mainly used when it is necessary to accelerate the setting of cement slurries in low temperature environment. In well cementing operations these additives are typically used added to the mixing water before the water is added to the cement powder or is added to the cement slurry on the surface.

Other accelerators used in cementing compositions are described in US 4,373,956, US 4,191,584 and US 4,444,593 which describe using different non-chloride based salts and organic compounds as accelerators.

The additives described in US patent 6,273,191 are used to increase compressive strength development in deepwater operations. The additives are added at the surface before the cement is placed downhole.

All the accelerators described above generally increase the hydration rate of all the cement phases. In most of the cases the acceleration phenomena induces an increase of the compressive strength development, but they do not induce a very quick setting of the cement slurry. Generally the first result of the acceleration phenomena is a gelation of the cement slurry and then its setting, but rarely an almost immediate setting.

US5447197, US5547506 and US6173778 describe activating a liquid cement whose hydration has been previously frozen. This is performed by adding on surface, specific activators such as sodium silicate, sodium hydroxide, etc. Once the slurry has been activated it can be pumped and placed downhole. This process does not address the problems mentioned above: the slurry is activated at surface temperature and is then cooled. Thus this invention does not reduce the setting time under downhole conditions.

US 6,209,646 describes encapsulating various chemicals, including accelerators, for well treating fluids and to delay the release of the corresponding chemicals in the fluid. The encapsulated additives are added to the cement mixture at surface.

US 6,644,316 and 6,554,071 also describe encapsulating CaCl₂ to use it for controlled time release applications. The aim is to delay the accelerating effect of the set cement slurry accelerator. The encapsulated CaCl₂ is mixed with the cement slurry on surface and it is released at slow rate by the coating dissolution of the encapsulated material once the cement slurry has been placed in the annulus. With this type of cement slurry setting activation the control of the hydration rate is highly dependent on the type of encapsulation and on the well conditions, especially on the temperature. The release of the additive occurs at a slow rate, so that the early hydration rate of the cement slurry is slightly accelerated but not strongly increased.

US 6,060,535, describes a method to induce a quick setting of an aluminate cement slurry under low temperature downhole conditions, however aluminate based cements are significantly more expensive than Portland cement.

US 5,533,570 describe various mechanical systems allowing injecting an activator at the casing shoe. However, there is no mention of specific chemical additives that could be used under these conditions.

Rapid cement setting is also required in civil engineering, i.e. in the shotcrete industry. The shotcrete systems are widely used in tunnelling operations or restoration works. The two main characteristics required for a shotcrete are that the initial and final set should occur within 3 and 12 min respectively and the strength development rate should be increased so that strength values of the order of 500-1000 psi (3.5 - 7 MPa) are rapidly attained. The main accelerators used are either organic compounds like triethanolamine or inorganic like sodium or potassium aluminate, sodium or potassium silicate. However the accelerators are not used alone but in combination with other salts as described in the US 4,257,814, US 4,444,593 and US 4,337,094, for example. These shotcrete type accelerators have only be used on surface and limited to very specific applications. In these operations the accelerator is either blended with the cement powder or added to the cement paste just after the mixing of the water with the cement powder and the other aggregates.

Therefore it is an objection of the invention to provide a method of cementing that allows an earlier compressive strength development with a rapid setting time for the cement slurry, such that the WOC time is reduced.

### Disclosure of the invention

Accordingly a first aspect of the invention comprises a method of accelerating the compressive strength development and setting time of a cement slurry during a cementing operation for a wellbore comprising: preparing a cement slurry comprising a hydraulic cement and water on the surface; placing the cement slurry in the wellbore; adding an activator to the cement slurry in the wellbore; and allowing the cement composition to set; wherein the activator acts as a set accelerating agent and a compressive strength enhancing additive.

In one embodiment the wellbore is at a low temperature.

Preferably the activator is post-added to the cement slurry at the casing shoe of the wellbore.

Preferably the activator is selected from calcium chloride, sodium aluminate, sodium hydroxide, a calcium nitrate and calcium nitrite solution, sodium silicate, calcium thiocyanate tetrahydrate, potassium hydroxide, potassium aluminate, aluminium hydroxide, aluminium hydroxide, an alkanolamine, a potassium citrate, a calcium salt, a sodium salt, a potassium salt, a ferric salt, an aluminum salt, zirconium salt, and mixtures thereof.

The activator can be a mixture of sodium hydroxide and sodium aluminate.

The cement may be retarded cement alternatively the cement is a non-retarded cement.

In one embodiment the cementing occurs during casing drilling operations. Alternatively the cementing occurs during a plug cementing operations.

In one embodiment of the invention the wellbore is a deepwater offshore wellbore.

### Mode(s) for carrying out the invention

The present invention provides a method of cementing that provides an early compressive strength development with a fast set time downhole for the cement to reduce the WOC time. As it is essential that the slurry rheology is low enough until the end of displacement the best way to reduce the WOC time, particularly in a casing drilling operation, is to have the cement slurry activated downhole. The method uses chemical additives that trigger the setting of an already mixed cement slurry, retarded or non-retarded, a short time after the activator addition while also enhancing the compressive strength development. This is achieved by adding a suitable activator to the cement slurry downhole. By post-adding the activator downhole activators that can not be used in conventional methods for cementing wellbores, can now be used.

The invention is particularly applicable for cementing of a casing in casing drilling operations where the WOC time is an important part of the drilling flat time. The method of the invention decreases the WOC time for the tail slurry of this cementing stage. The method can also be applied for primary cementing of conventional casings and also in the case of remedial cementing, such as the set of cement plugs.

The invention can also be very useful to decrease the WOC time during cementing of the first surface casing in deepwater offshore conditions. The first surface casing is typically cemented by the "stab-in" technique where cement is pumped through a drill pipe stabbed in the float shoe connected to the bottom of the casing. Once the cement has been pumped the operators has to wait until the tail slurry has set at the casing shoe to trip out the drill string and to continue the drilling process. The drill pipe can not be disconnected before the tail cement has set because it has to maintain the casing. Once the cement has set with enough strength the cement can sustain the casing. This is typically around 50psi (0.345 MPa) of compressive strength. This can be achieved only when the cement has started to set. Therefore to reduce the WOC time, the cement system needs to develop an early compressive strength and reach the 50psi (0.345 MPa) as quick as possible, once it is in its static position just at the end of the displacement in the annulus. The cement system then has to develop a standard compressive strength and reach at least 500 psi (3.45 MPa) in the shortest possible time, so that drilling can be restarted. Therefore the time between 50 psi (0.345 MPa) and 500 psi (3.45 MPa) should be shorter than the time required to trip out the drill pipe and to trip in the drill bit to drill ahead, to minimize the WOC time.

In order to develop an early compressive strength with a fast set time for the cement the accelerator is added downhole to the cement slurry just near the casing shoe and not at the mixing stage on surface. This reduces the displacement time of the accelerated slurry to a few minutes and it allows powerful accelerators of Portland cement to be used. The condition is that the slurry must be still fluid after the activators addition to the slurry until the end of the cement slurry displacement in the annulus.

The critical parameter is the time for the cement slurry to reach 500 psi (3.45 MPa) of compressive strength after the activator is added to the slurry. Nevertheless it is crucial that the setting starts after a short period of time corresponding to the end of displacement, typically 10-15 minutes, and not immediately after the activators addition.

The cement slurry is prepared by mixing a cement powder with water on the surface. Necessary additives such as, antifoam agents, dispersing agents, gas block agents and retarders are also added to the cement slurry on the surface. The cement slurry is then pumped down the borehole. The accelerator is then post-added to the cement slurry when it is downhole, preferably near the casing shoe.

The activators used can be effective in the temperature range from 32°F (0°C) to 212°F(100°C), but preferably from 104°F (40°C) to 212°F(100°C), and are preferably selected from a:
- 1 % to 40%/w (CaCl₂) calcium chloride aqueous solution, preferably 37.5%/w;
- 1 % to 80%/w (NaAlO₂, NaAl(OH)₄) sodium aluminate aqueous solution, preferably 44.44%/w;
- 1 % to 80%/w (NaOH) sodium hydroxide aqueous solution, preferably 37.5%/w;
- 1 to 40%/w calcium nitrate, 1 to 40%%w calcium nitrite, 1-20%/w diethylene glycol, 1-20%/w methyldiethanolamine and 1-20%/w calcium bromide aqueous solution;
- 1 % to 50%/w (Na₂SiO₃), sodium silicate aqueous solution, preferably 30%/w;
- D075, sodium silicate solution (water glass)
- Sodium silicate solution (Water glass) and other sodium silicate solutions;
- 1 to 100%/w (Ca(SCN)₂,4H2O), calcium thiocyanate tetrahydrate aqueous solution;
- 1 % to 80%/w (KOH) potassium hydroxide aqueous solution, preferably 44.44%/w;
- 1 to 80%/w (Al(OH)₃) Aluminum Hydroxide in basic solution ( pH> 12);
- Alkanolamines solutions such as methyldiethanolamine, ethanolamine and triethanolamine, preferably triethanolamine;
- 1 to 100%/w potassium citrate aqueous solution or other water soluble citrate;
- aqueous solutions of calcium nitrate, calcium nitrite, calcium thiocyanante, or calcium carbonate (calcium salts); sodium salts, potassium salts or other alkali and alkaline earth metal halides, formates, nitrates and carbonates aqueous solutions;
- ferric salts, aluminum salts, or zirconium salts aqueous solution;
- or mixtures of the above activators.

The invention is also useful for reducing the WOC time in low temperatures environments. In particular for cementing operations in deepwater offshore wells where temperatures at sea bottom area as low as 39°F (4°C), and even lower in arctic zones so that the circulating temperature of the cement typically ranges between from 39°F (4°C) - 77°F (25°C). As the low temperature conditions naturally increases the setting time of the slurry and the hydration is naturally delayed due to the low temperature conditions the use of accelerators is necessary in low temperature conditions. In the case of cementing surface casing, particularly in offshore operations, temperatures can be as low as 10°C for the first surface casing, and therefore it is necessary to use accelerators when cementing the surface casing. However it can be difficult to control the setting time of cement when accelerators developed to be used at low temperatures are used because if they are added to the cement on the surface the slurry temperature there would trigger a too-fast setting of the slurry, before the slurry is placed in the annulus which requires some time. Therefore adding the accelerator downhole after mixing of the slurry is particularly applicable in low temperature conditions.

Therefore if the cementing operation is taking place at a low temperature environment the activators used have to be effective at this low temperature. Preferably then the activators are effective in the temperature range of 0°C (32°F) to 40°C (104°F). Preferably the activators are selected from:
- 1 % to 80%/w (NaAlO₂, NaAl(OH)₄) sodium aluminate aqueous solution, preferably 44.44%/w;
- 1 % to 80%/w (KAl(OH)₄, K₂Al₂O₄,3H₂O) potassium aluminate aqueous solution;
- 1 % to 80%/w (NaOH) sodium hydroxide aqueous solution, preferably 37.5%/w;
- 1 % to 80%/w (KOH) potassium hydroxide aqueous solution, preferably 44.44%/w;
- Aluminium Hydroxide Silicate Sulfate solution;
- 1 % to 80%/w (Al(OH)₃) Aluminum hydroxide in basic solution (pH >12);
- Alkanolamines solutions such as methyldiethanolamine, ethanolamine and triethanolamine, preferably triethanolamine;
- 1 to 100%/w potassium citrate aqueous solution or other water soluble citrate;
- or mixtures of the above activators.

The cement used can be of any type of Portland cement, such as classes A, C, H and G, or equivalent hydraulic cements.

### Example 1:

To simulate the downhole activation of the cement slurry by post adding downhole a chemical to accelerate the cement hydration, the following tests of cement slurries are carried out. The slurries are tested at temperatures of 122°F (50°C) and 176°F (80°C)

The retarded cement slurry used at 122°F (50°C) is a 15.8ppg (1.83 g/cm³) Portland cement slurry type G with an antifoam agent (0.02gal/sk), a dispersing agent (0.025 gal/sk) and a retarder (0.035 gal/sk).

The retarded cement slurry used at 176°F (80°C) is a 15.8ppg (1.83 g/cm³) Portland cement slurry type G with an antifoam agent (0.02gal/sk), a dispersing agent (0.08 gal/sk) and a retarder (0.042 gal/sk).

The activators used are in liquid form. The aqueous solutions are prepared with distilled water and stored at ambient temperature. The activators used in the tests are:
Activator A: 37.5%/w calcium chloride aqueous solution (CaCl₂).
Activator B: 44.44%/w sodium aluminate aqueous solution (NaAlO₂,
NaAl(OH)₄).
Activator C: 37.5%/w sodium hydroxide aqueous solution (NaOH).
Activator D: 20%/w calcium nitrate (Ca(NO₃)₂), 20%w calcium nitrite
(Ca(NO₂)₂) aqueous solution.
Activator E: 30%/w sodium silicate aqueous solution (Na₂SiO₃).
Activator G: 50%/w calcium thiocyanate tetrahydrate aqueous solution
(Ca(SCN)₂,4H2O).

The cement slurry is mixed according to the American Petroleum Institute (API)/ISO standard mixing procedure (API specifications 10A/ISO 10426-1-2001) without an activator. The slurry is then conditioned for one hour in an atmospheric consistometer at the stated temperature. After the conditioning period the consistometer is stopped and an activator is added to the slurry. The consistometer is immediately restarted for another 10 minutes. The activator is preheated in an oven at the test temperature for at least 30 minutes before it is added to the conditioned slurry. After the second conditioning period the slurry is transferred to the UCA (Ultrasonic Cement Analyzer) cell for testing. For the slurries tested without an activator, the slurry mixed and is conditioned at the test temperature for 1 hour 10 minutes before transferring to the UCA cell.

The thickening time of the slurries is also tested. The thickening time tests for the slurries without any activator added are performed in a pressurized consistometer after mixing. The thickening time tests for the slurries with an activator added are preformed in an atmospheric consistometer. After mixing of the slurry without activator the slurry is poured in the consistometer cell and heated up from ambient temperature to the test temperature. The slurry is conditioned for one hour. The activator solution is then added to the slurry after conditioning. At this stage the thickening time test begins.

Tables 1 to 7 present the results of the UCA and Thickening Time tests added to a retarded cement slurry, where a time of 0h00min indicates that the slurry immediately overcomes the corresponding consistency value after addition of the activator. Different concentrations at different temperatures are also compared, where gps is gallons per sack of cement. The results of the activator containing cement slurries are compared to a non-activated cement slurry.

Retarded cement slurries are activated with one of activators A-E, or G at 122°F (50°C). The results obtained for the UCA and Thickening Time (T.T.) tests, carried out as discussed above, are shown in Table 1.

**Table 1**

| Sample | | A | B | C | D | E | G |
|---|---|---|---|---|---|---|---|
| Activator | None | CaCl₂ solution | NaAlO₂ solution | NaOH solution | **Ca(NO₃)₂/ Ca(NO₃)₂ Solution** | Na₂SiO₃ solution | Ca(SCN)₂.4H₂0 solutions |
| Concentration | - | 0.37 gps | 1.5 gps | 0.5 gps | 1.2 gps | 0.5 gps | 1.5 gps |
| T.T. | | | | | | | |
| Time to POD (point of departure) | 5h 54min | 1h 32min | 0h 15min | 0h 00min | 0h 00min | 0h 00min | - |
| Time to 30 Bc | 7h 23min | 2h 06min | 0h 18min | 0h 00min | 1h 24min | 0h 48min | - |
| Time to 100Bc | 7h 56min | 2h 40min | 0h 19min | 2h 18min | 2h 21min | 3h 41min | - |
| UCA: | | | | | | | |
| Time to 50 psi | 6h 16min | 2h 20min | 0h 24min | 1h 36min | 2h 24min | 1h 16min | 3h 04min |
| Time to 500 psi | 7h 56min | 4h 00min | 2h 00min | 3h 24min | 3h 56min | 4h 12min | 5h 16min |
| Compressive strength value at 17h (psi) | 2160 | 2388 | 2730 | 1070 | 1778 | 1796 | 1550 |

Different concentrations of activator A, a CaCl₂ solution, are added to a retarded cement slurry and are tested at 122°F (50°C). The results of the UCA and thickening time tests, carried out as discussed above, are shown in Table 2 compared to a non-activated retarded reference cement slurry activated.

**Table 2**

| Activators | None | A=CaCl₂ solution | A= CaCl₂ solution |
|---|---|---|---|
| Concentration | - | 0.74gps | 1.0gps |
| T.T. | | | |
| Time to POD. | 5h 36min | 0h 53min | 0h 00min |
| Time to 30Bc | 5h 59min | 1h 15min | 1h 00min |
| Time to 100Bc | 6h 30min | 1h 43min | 1h 30min |
| UCA: | | | |
| Time to 500psi | 8h 28min | 2h 04min | 1h 36min |
| Compressive strength value at 17h (psi) | 1983 | 2537 | 2446 |

Different concentrations of activator G, a D075 solution, are added to a retarded cement slurry and are tested at 122°F (50°C). The results of UCA tests, carried out as discussed above, are shown in Table 3 and compared to a non-activated retarded reference cement slurry activated.

**Table 3:**

| Activators | None | F=D075 | F= D075 |
|---|---|---|---|
| Concentration | - | 0.347gps | 0.555 gps |
| T.T. | | | |
| Time to POD | 5h 36min | - | - |
| Time to 30Bc | 5h 59min | - | - |
| Time to 100Bc | 6h 30min | - | - |
| UCA: | | | |
| Time to 50 psi | 6h 52min | 0h 40min | 0h 16min |
| Time to 500psi | 8h 28min | 1h 52min | 1h 36min |
| Compressive strength value at 17h (psi) | 1983 | 2880 | 2746 |

A mixture of activators B and C, a sodium aluminate and sodium hydroxide solution, are added in different concentrations to a retarded cement slurry and are tested at 122°F (50°C). The results for the UCA and Thickening time tests, carried out as discussed above, are shown in Table 4 and compared to a non-activated retarded reference cement slurry activated.

**Table 4:**

| Activators | None | B+C | B+C |
|---|---|---|---|
| Concentration | - | 0.05gps + 0.05 gps | 0.1 gps + 0.1 gps |
| T.T. | | | |
| Time to POD | 5h 54min | 0h 00min | 0h 47min |
| Time to 30Bc | 7h 23min | 4h 58min | 0h 51min |
| Time to 100Bc | 7h 56min | 5h 56min | 1h 40min |
| UCA: | | | |
| Time to 50psi | 6h 16min | 3h 52min | 1h 52min |
| Time to 5000psi | 7h 56min | 5h 52min | 3h 32min |
| Compressive strength value at 17h (psi) | 2160 | 2160 | 2489 |

Retarded cement slurries are activated with one of activators A-C at 176°F (80°C). The results obtained for the UCA and Thickening Time tests, carried out as discussed above, are shown in Table 5.

**Table 5**

| Activators | None | A=CaCl₂ solution | B=NaAlO₂ solution | C=NaOH solution |
|---|---|---|---|---|
| Concentration | - | 0.37gps | 0.1gps | 0.3gps |
| T.T. | | | | |
| Time to POD | 9h 28min | - | - | 12min |
| Time to 30Bc | 10h 10min | - | - | 50min |
| Time to 100Bc | 10h 17min | - | - | 1h 20min |
| UCA: | | | | |
| Time to 50 psi | 8h 28min | 4h 32min | 3h 16min | 1h 48min |
| Time to 500psi | 9h 28min | 5h 56min | 3h 56min | 2h 08min |
| Compressive strength value at 17h (psi) | 2410 | 2095 | 2730 | 2763 |

Different concentrations of activator A, a CaCl₂ solution, are added to a retarded cement slurry and are tested at 176°F (80°C). The results of the UCA and thickening time tests, carried out as discussed above, are shown in Table 6 and compared to a non-activated retarded reference cement slurry.

**Table 6:**

| Activators | None | A=CaCl₂ solution | A= CaCl₂ solution |
|---|---|---|---|
| Concentration | - | 0.74gps | 1.0gps |
| UCA: | | | |
| Time to 500psi | 10h 00min | 1h 36min | 1h 36min |
| Compressive strength value at 17h (psi) | 2629 | 2454 | 2384 |

A mixture of activators B and C, a sodium aluminate solution and sodium hydroxide solution, is added to a retarded cement slurry and tested at 176°F (80°C). The results of the UCA and thickening time tests, carried out as discussed above, are shown in Table 4 and compared to a retarded reference cement slurry activated with only activator B, a sodium aluminate solution or activator C, a sodium hydroxide solution.

**Table 7:**

| Activator | B= NaAlO₂ solution | C= NaOH solution | B + C |
|---|---|---|---|
| Concentration | 0.1 gps | 0.3 gps | 0.1 gps + 0.1 gps |
| T.T. | | | |
| Time to POD | - | 0h 12min | 1h 07min |
| Time to 30 Bc | - | 0h 50min | 1h 28min |
| Time to 100 Bc | - | 1h 20min | 2h 15min |
| UCA: | | | |
| Time to 50 psi | 3h 16min | 1h 48min | 1h 24min |
| Time to 500psi | 3h 56min | 2h 08min | 1h 52min |
| Compressive strength value at 17h (psi) | 2730 | 2763 | 3000 |

The result show that different activators are suitable to achieve a strong increase of the compressive strength development of retarded cement slurries by way of the adding the activator after mixing of the cement slurry while also achieving a rapid setting time.

The activators added after mixing and initial conditioning of the cement slurry reduce the time required for the cement to reach the 500psi (3.45 MPa) value of compressive strength. Compared to a conventional retarded system without an activator added, the cement systems of the invention reach a 500psi (3.45MPa) compressive strength up to 7 hours earlier than the conventional retarded system. This decrease in time to reach a significant level of compressive strength results in a decrease in WOC and will have a significant impact on the economics of the well, when the WOC time is associated to the rig time.

The activators added after mixing are able to achieve the rapid setting of the cement slurry without compromising the compressive strength development. As shown in tables 1-7 the compressive strength of the different embodiments of the system after 17 hours have an acceptable value in terms of mechanical properties for the set cement. The temperature of the environment where the activators are used, will determine what activator is the most efficient, and the concentration of activator used.

While it is beneficial to decrease the WOC time for casing drilling, downhole activation of the cement slurry setting is also useful in conventional drilling when it is required to reduce the WOC time either for a specific application or for economical reason. For example because of gas migration during primary cementing operations it is beneficial to reduce WOC time. If the cement sets almost immediately when it has been placed in the annulus, this will prevent gas migration problems.

In remedial cementing, all types of cement plugs can be addressed, such as lost circulation plugs, for which time-to-set is a critical parameter for technical effectiveness, and also the kick-off plugs placement, with reduced WOC time and enhanced properties. The advantages obtained from downhole activation in these applications are mainly due to reduced costs, mainly as a result of reducing the rig time, which is critical cost in many operations.

### Example 2:

To simulate the downhole activation of the cement slurry at low temperatures by post adding downhole a chemical to accelerate the cement hydration, the following tests on cement slurries are carried out.
The slurries are tested at temperatures of 77°F (25°C) and 50°F (10°C).

The cement slurry used for the tests is a 15.8 ppg (1.89 g/cm³) Portland cement slurry type G with an antifoam agent (0.02 gal/sk) and a dispersing agent (0.04 gal/sk). The composition is referred to as the neat cement composition in the results.

The activators are used in liquid form. The activators used in the tests are: Activator B: 44.44% w Sodium aluminate aqueous solution (NaAlO₂, NaAl(OH)₄).
Activator C: 37.5%/w Sodium hydroxide aqueous solution (NaOH).
Activator H: 44.44% Potassium hydroxide aqueous solution (KOH)
Activator I: Aluminum hydroxide silicate sulfate solution.
Activator J: Aluminum hydroxide in basic solution (pH > 12)
Activator K: Triethanolamine solution.

The cement slurry was mixed following the API/ISO mixing procedure (specification 10A /ISO 10426-1-2001). The neat cement slurry was then conditioned for a period of time at the test temperature in an atmospheric consistometer in order to simulate displacement of the slurry. After a period of time the consistometer is stopped and activator is added to the slurry. The consistometer is immediately restarted for another 10 minute conditioning period. At the end of the second conditioning period the slurry is transferred to a UCA cell for testing. For the neat cement slurries tested no activator is added after the first conditioning period.

The tests allow the compressive strength development of the cement slurries over time to be followed. Tables 8-16 present the results of the UCA tests showing the time after which 50 psi (0345 MPa) and 500 psi (3.45MPa) are reached, and the compressive strength value of the cement after 18 hours of hydration, if available.

The results of the activators of the invention are compared to a neat cement slurry containing no accelerator and a conventional accelerated cement slurry. The conventional slurry used CaCl₂ as the accelerator.

Different concentrations of activator A, a NaAlO₂ solution, are added to the neat cement slurry (class G type) and tested at 77°F (25°C). The results obtained for the UCA tests are shown in Table 8.

**Table 8:**

| Activator B (gals/sk) | Time to achieve 50 psi | Time to achieve 500 psi | Compressive strength 18 hours after activator addition (psi) |
|---|---|---|---|
| Neat cement | 5h 31 min | 10h 53min | 1269 |
| Regularly Accelerated | 2h 09 | 8h 00 | 1167 |
| 1.00 | 1 h 13 min | 10h 17min | 1078 |
| 1.30 | 1 h 06 min | 6h 46min | 1298 |
| 1.60 | 1 h 40min | 4h 41 min | 1439 |
| 2.00 | 1 h 11 min | 3h 20min | 1713 |

Different concentrations of activator B, a NaAlO₂ solution, are added to the neat cement slurry (class G type) and tested at 50°F (10°C). The results obtained for the UCA tests are shown in Table 9.

**Table 9:**

| Activator B (gals/sk) | Time to achieve 50 psi | Time to achieve 500 psi | Compressive strength 18 hours after activator addition (psi) |
|---|---|---|---|
| Neat cement | 13h 38 min | NA | 150 |
| Regularly Accelerated | 7h 15min | NA | 285 |
| 1.00 | 0 h 08 min | NA | 444 |
| 1.40 | 0 h 13 min | 12 h 43 min | 914 |
| 2.00 | 1 h 21 min | 4 h 17 min | 990 |
| 2.20 | 1 h 25 min | 4 h 15 min | 975 |
| 2.50 | 1 h 15 min | 4 h 33 min | 747 |

Activator C, a NaOH solution, is added to the neat cement slurry (class G type) and tested at 77°F (25°C). The results obtained for the UCA tests are shown in Table 10.

**Table 10:**

| Activator C (gals/sk) | Time to achieve 50 psi | Time to achieve 500 psi | Compressive strength 18 hours after activator addition (psi) |
|---|---|---|---|
| Neat cement | 5h 31 min | 10h 53 min | 1269 |
| Regularly Accelerated | 2 h 09 min | 8 h 00 | 1167 |
| 1.00 | 1 h 17 min | 4 h 30 min | 1463 |

Activator C, a NAOH solution, is added to the neat cement slurry (class G type) and tested at 50°F (10°C). The results obtained for the UCA tests are shown in Table 11.

**Table 11:**

| Activator C (gals/sk) | Time to achieve 50 psi | Time to achieve 500 psi | Compressive strength 18 hours after activator addition (psi) |
|---|---|---|---|
| Neat cement | 13 h 38 min | NA | 150 |
| Regularly Accelerated | 7 h 15 min | NA | 285 |
| 1.00 | 4 h 24 min | 11 h 12 min | 1006 |

Activator H, a KOH solution, is added to the neat cement slurry (class G type) and tested at 77°F (25°C). The results obtained for the UCA tests are shown in Table 12.

**Table 12:**

| Activator H (gals/sk) | Time to achieve 50 psi | Time to achieve 500 psi | Compressive strength 18 hours after activator addition (psi) |
|---|---|---|---|
| Neat cement | 5 h 31 min | 10 h 53 min | 1269 |
| Regularly Accelerated | 2 h 09 min | 8 h 00 | 1167 |
| 1.75 | 2 h 01 min | 5 h 51 min | 1394 |

Activator I, a aluminum hydroxide silicate sulfate solution, is added to the neat cement slurry (class G type) and tested at 77°F (25°C). The results obtained for the UCA tests are shown in Table 13.

**Table 13:**

| Activator I (gals/sk) | Time to achieve 50 psi | Time to achieve 500 psi | Compressive strength 18 hours after activator addition (psi) |
|---|---|---|---|
| Neat cement | 5 h 31 min | 10 h 53 min | 1269 |
| Regularly Accelerated | 2 h 09 min | 8 h 00 | 1167 |
| 1.00 | 0 h 40 min | 12 h 12 min | 744 |

Activator J, a Al(OH)₃ solution, is added to the neat cement slurry (class G type) and tested at 77°F (25°C). The results obtained for the UCA tests are shown in Table 14.

**Table 14:**

| Activator J (gals/sk) | Time to achieve 50 psi | Time to achieve 500 psi | Compressive strength 18 hours after activator addition (psi) |
|---|---|---|---|
| Neat cement | 5 h 31 min | 10 h 53 min | 1269 |
| Regularly Accelerated | 2 h 09 min | 8 h 00 min | 1167 |
| 1.00 | 2 h 56 min | 8 h 00 min | 1370 |

A combination of activator K and activator C, a triethanolamine solution and a NaOH solution, are added in different concentrations to the neat cement slurry (class G type) and tested at 77°F (25°C). The triethanolamine solution, is added to the mixing water of the slurry, while the NaOH solution is added to the slurry after the first conditioning period. The results obtained for the UCA tests are shown in Table 15.

**Table 15:**

| Activator K (gals/sk) | Activator C (gals/sk) | Time to achieve 50 psi | Time to achieve 500 psi | Compressive strength 18 hours after activator addition (psi) |
|---|---|---|---|---|
| Neat cement | | 5 h 31 min | 10 h 53 min | 1269 |
| Regularly Accelerated | | 2 h 09 min | 8 h 00 | 1167 |
| 0.025 | 1.50 | 0 h 25 min | 1 h 54 min | - |
| 0.010 | 1.50 | 0 h 21 min | 1 h 44 min | 1660 |
| 0.005 | 1.50 | 0 h 34 min | 2 h 07 min | 1692 |
| 0.005 | 1.00 | 1 h 53 min | - | - |
| 0.01 | 1.00 | 0 h 49 min | 3 h 45 min | 1451 |

Different concentrations of activator B, a NaAlO₂ solution, are added to a class A type cement slurry and tested at 77°F (25°C). The results obtained for the tests are shown in Table 16:

**Table 16:**

| Activator B (gals/sk) | Time to achieve 50 psi | Time to achieve 500 psi | Compressive strength 18 hours after activator addition (psi) |
|---|---|---|---|
| 1.00 | 0 h 56 min | 7 h 17min | - |
| 1.60 | 0 h 56 min | 1 h 37 min | - |

The results show that the activators are suitable for achieving a rapid early compressive strength development for cement slurries at low temperatures by way of adding the activator after mixing of the cement slurry. The time necessary to reach 50 psi (0.345 MPa) of compressive strength is shorter for all the activators shown compared to conventional accelerated systems currently used. The results also show that in most situations the time to reach 500 psi (3.45 MPa) is also shorter when using most of the activators according to the invention compared to using conventional accelerated systems. This decrease in time to reach the 50 psi (0.345 MPa) and the 500psi (3.45 MPa) compressive strength values results in a decrease in WOC time which will have significant impact on the economics of the well.

For all the activators used the setting of the slurry starts at least 10 minutes after the accelerator is added. This is useful as it ensures that there is enough time for the cement slurry to be properly placed before the setting starts.

To achieve a rapid setting of the cement slurry, so that there is early compressive strength development without compromising the compressive strength development over the longer time, the right concentration of activator has to be used. As shown in Tables 8 and 9 activator B, a sodium aluminate aqueous solution, is a particularly efficient accelerator at low temperatures.

As shown in Table 15 by combining a first activator, such as activator K, in the mixing water of the cement slurry and then adding a second activator, such as activator C, at a later stage, a good early compressive strength can be developed.

The accelerators can be used with different classes of API oil well cement, other than class G cement. As shown from the UCA test results in Table 16 activator A is also efficient with class A type cement.

The cooler the temperatures the longer the cement takes to set, and therefore the use of additives to accelerate the setting time is important in low temperature conditions. In low temperatures by adding the activator close to where the slurry has to set the WOC is reduced and a quick setting time without comprising the compressive strength development of the cement can be obtained. Sodium aluminate solutions and sodium hydroxide solutions are particularly suitable as additives to be added to the cement slurry downhole in low temperature conditions.

## Claims

1. A method of accelerating the compressive strength development and setting time of a cement slurry during a cementing operation for a wellbore comprising:
preparing a cement slurry comprising a hydraulic cement and water on the surface;
placing the cement slurry in the wellbore;
adding an activator to the cement slurry in the wellbore; and
allowing the cement composition to set;
wherein the activator acts as a set accelerating agent and a compressive strength enhancing additive.

2. A method according to claim 1 wherein the wellbore is at a low temperature.

3. A method according to claim 1 or 2 wherein the activator is post-added to the cement slurry at the casing shoe of the wellbore.

4. A method according to claims 1, 2 or 3 wherein the activator is selected from calcium chloride, sodium aluminate, sodium hydroxide, a calcium nitrate and calcium nitrite solution, sodium silicate, calcium thiocyanate tetrahydrate, potassium hydroxide, potassium aluminate, aluminium hydroxide, aluminium hydroxide silicate sulfate, an alkanolamine, a potassium citrate, a calcium salt, sodium salt, potassium salt, ferric salt, aluminum salt, zirconium salt and mixtures thereof.

5. A method according to any of claims 1-4 wherein the activator is calcium chloride.

6. A method according to any of claims 1-4 wherein the activator is sodium aluminate.

7. A method according to any of claims 1-4 wherein the activator is sodium hydroxide.

8. A method according to any of claims 1-4 wherein the activator comprises calcium nitrite and calcium nitrate in a weight ratio of about 1:1.

9. A method according to any of claims 1-4 wherein the activator is sodium silicate.

10. A method according to any of claims 1-4 wherein the activator is calcium thiocyanate tetrahydrate.

11. A method according to claims 1-4 wherein the activator is potassium hydroxide.

12. A method according to any of claims 1-4 wherein the activator is potassium aluminate.

13. A method according to claims 1-4 wherein the activator is aluminum hydroxide.

14. A method according to any of claims 1-4 wherein the activator is aluminum hydroxide silicate sulfate.

15. A method according to any of claims 1-4 wherein the activator is an alkanolamine.

16. A method according to any of claims 1-4 wherein the activator is potassium citrate.

17. A method according to any of claims 1-4 wherein the activator is a calcium salt.

18. A method according to any of claims 1-4 wherein the activator is a sodium salt.

19. A method according to any of claims 1-4 wherein the activator is a potassium salt.

20. A method according to any of claims 1-4 wherein the activator is a ferric salt.

21. A method according to any of claims 1-4 wherein the activator is an aluminum salt.

22. A method according to any of claims 1-4 wherein the activator is a zirconium salt.

23. A method according to any of claims 1-4 wherein the activator is mixture of sodium aluminate and sodium hydroxide.

24. A method according to any of claims 1-23 wherein the cement slurry is a retarded cement slurry.

25. A method according to any of claims 1-23 wherein the cement slurry is a non-retarded cement slurry.

26. A method according to any of claims 1-23 wherein the cementing occurs during casing drilling operations.

27. A method according to any of claims 1-23 wherein the cementing occurs during plug cementing operations.

28. A method according to any of claims 1-27 wherein the wellbore is a deepwater offshore wellbore.
